# EUROPEAN PATENT APPLICATION

(11) **EP 1 279 477 A1**
(43) Date of publication of application: **29.01.2003**
(21) Application number: 02016514.8
(22) Date of filing: 23.07.2002
(51) Int. Cl.: B29C 49/42, B29C 49/48, B29C 49/00, B29C 49/06

(54) **Apparatus and a method of blow moulding a bottle**

(30) Priority: 27.07.2001 JP 2001228440
(71) Applicant: Taisei Kako Co., Ltd., Osaka-shi, Osaka 531-0073 (JP)
(72) Inventor: Hamamoto, Keiji, Ibaraki-shi, Osaka 567-0054 (JP); Kimura, Taizo, Ibaraki-shi, Osaka 567-0054 (JP)
(74) Representative: Paul, Dieter-Alfred, Dipl.-Ing.

(57) **Abstract**

The present invention aims at usage of a noncontact sensor to position preforms so that angular position of each preform can be adjusted finely to take a precisely correct position before stretched and blow molded, without incurring the problem of dusting.

A method of blow molding bottles includes the step of preliminary positioning the preforms between the heating step and the blowing step within a blowing mold, such that the noncontact sensor detects profiled detective portions (7) of each preform so that these portions of a given shape and disposed at different peripheral points are positioned relative to the mold by rotating each preform. The method further includes the step of finally positioning the preforms such that the blowing mold is closed to tightly surround each preform so as to engage the profiled detective portions with inner and profiled face portions formed in the mold, so that each preform is fixed in the mold in such a state that angular positions (9) of the profiled detective portions are precisely regulated and adjusted relative to said mold.

## Description

### FIELD OF THE INVENTION

The present invention relates to an apparatus and a method for blow molding a bottle, and more particularly to the apparatus and method adapted to stretch-blow mold the oval bottle from a preform that is a non-uniform thickness.

### BACKGROUND OF THE INVENTION

The present applicant disclosed in the Japanese Patent Laying-Open Gazette No. 2000-127230 an innovated blow molding method designed to produce an oval bottle from preform that is an uneven wall thickness. According to this method, distribution of wall thickness of the blow molded oval bottle can be rendered even. This feature is advantageous in that a sufficient mechanical strength is afforded to each molded bottle in the direction of its major axis, while enhancing its ability of being squeezed in the direction of minor axis.

In order to produce the oval bottle so that the yield is excellent and productivity may rise, the preform of uneven wall thickness must be positioned accurately, quickly and automatically in the circumferential direction relative to a blowing mold. An example of the apparatuses that enable such a positioning of the preforms is disclosed in the Japanese Patent Laying-Open Gazette No. 2000-202899.

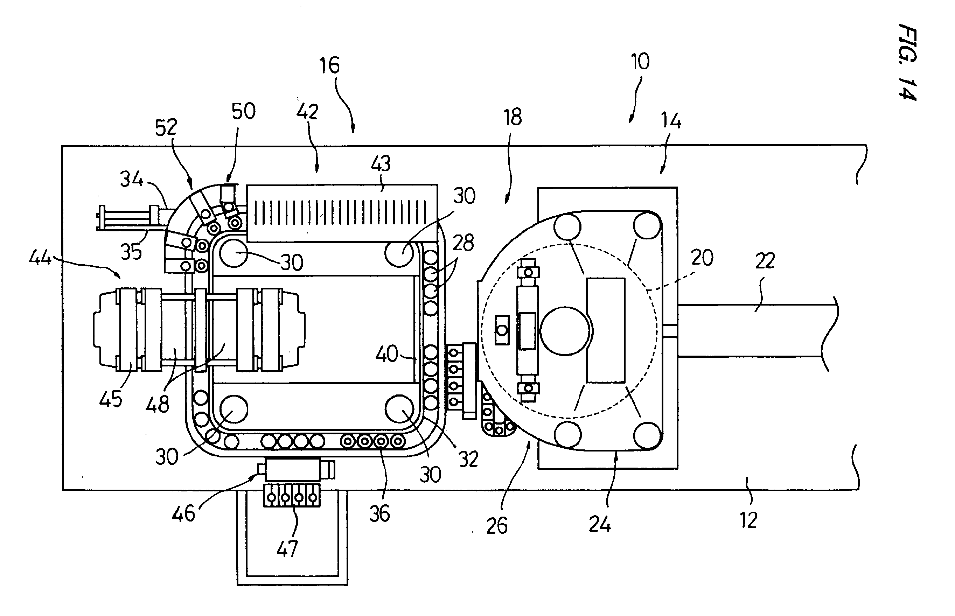

As will be seen in Fig. 14, the blow molding apparatus of this type comprises a bed 12 supporting three stations that are basically a preform molding station 14, a blow molding station 16 and a transfer station 18 intervening between the former two stations 14 and 16.

The preform molding station 14 has two injection core sections that are diametrically opposed one to another, to be spaced an angle of 180 degrees one from another on a rotary passage of this station. A rotor 20 holding thereon the two injection core sections is driven intermittently and in a circulating manner passing their stops. At the stop of each injection core section, an injection-molding region 24 is disposed to face an injector 22, with a releasing region 26 being located to face the injection-molding region 24.

The injector 22 has an injection cavity section to be pressed to and fastened on each injection core so that several, for instance eight, preforms are produced concurrently. On the other hand, at the releasing region 26, the injection core will be drive and released relative to the preform 28 so as to be able to take it out of the injection core section. Each of the preforms has a neck portion molded in a necking cavity section so that this cavity section cooperates with the injection core section to hold each preform 28 being transported by and on the rotor 20 towards the releaser 26.

At the releasing region 26, the injection core section will be released in part from the preforms before they are taken off the necking cavity section and removed from the preforming mold.

Such an injection molded preform has a neck portion continuing to an open mouth and a barrel portion with a closed bottom. The barrel portion is of an uneven wall thickness to have thicker zones diametrically opposed one to another. A double-threaded screw is formed on and integral with the neck portion of each preform, and has two concavities arranged diametrically to correspond to the thicker zones of the barrel portion of preform. Opposite ends of each concavity are formed integral with stopping lugs (viz., positioning lugs) that bridge the two screw threads to accurately position the preform 28 in a direction of its circumference.

A transporting chain 32 disposed at the blow molding station 16 is spanned over four transporting sprockets 30. One of these sprockets has a pinion in mesh with the chain so as to be driven by a rack 35 attached to a transporting cylinder 34. These members constitute a circulating transportation system in this molding station.

A number of preform holders 36, for instance thirty-six holders, are secured to the transporting chain 32, at regular intervals therealong. Each holder 36 is designed to carry one of the preforms or a blow molded bottle.

Disposed in the passage for those preform holders 36 are a receiving region 40 for receiving the preforms 28 from the transfer station, a heating region 42 for heating the preforms 28 received at the receiving region 40 to a temperature significantly higher than the blow molding temperature, a blow molding region 44 for stretch-blow molding the preheated preform 28 to give an oval bottle and a releasing region 46. The releasing region 46 is for removing the thus blow molded bottles out of this apparatus.

In he heating region 42, a heating device 43 is disposed. The device 43 may for example comprise several infrared heaters extending along the transportation passage and stacked one above another at several heights of the preforms. Spin-causing sprockets are attached to the preform holders and kept in mesh with a spin-causing chain. Thus, each preform 28 passing by the heating device 43 will make rotation on its own axis so as to be heated uniformly all over its periphery.

A section-fastening mechanism 45 is built in the blow-molding region 44, so that blow cavity sections 48 will be forced to tightly grip each preform 28. In an example, 4 (four) preforms are blow molded at the same time.

A releasing device 47 in the releasing region 46 is designed to take out the finished bottles, while turning them upside down so that their mouths will face upwards.

The transfer station 18 receives the preforms 28 being discharged out of the releasing region 26 of the preform molding station 14 and then delivers them to the receiving region 40 disposed in the blow molding station 16.

At the releasing region 26 in the preform molding station 14, all of the preforms 28 simultaneously molded in the injection-molding region 24 will be taken out at once. In an example, the number of such preforms 28 simultaneously discharged from the station 14 may be 8 (eight). However at the transfer station 18, they are divided into some lots each consisting for instance of 4 (four) preforms 28 so that they are delivered to the receiver 40 'one lot by one lot'.

The preforms 28 are molded in the preform molding station 14 to take their normal position such that their mouths face upwards. However, they 28 will be turned upside down at the transfer station 18 to take their re-versed position when transferred to the blow molding station 16.

The preform holders 36 will travel intermittently at the blow molding station 16. Consequently, a zone located intermediate between the heating device 42 and blow molder 44 serves as a waiting zone for temporary and intermittent storage of the preforms having been heated.

Thus, the preforms 28 having traveled through the heating region 42 and been preheated by the heating device 43 do stay at the waiting zone 50 for a time. During such a standby period, temperature difference between the outer and inner layers of each preform 28 will be reduced. The waiting zone 50 is disposed at one of corners that define the circulating passage for the preform holders 36.

A position regulator 52 incorporated in the waiting zone 50 will regulate the peripheral position of every preform just delivered from the heating region 42.

In detail, the prior art regulator 52 having a positioning member causes each preform 28 to spin around its own axis until the stopping lug of the preform collides with a pawl of the positioning member. In this way, every preform 28 is surely caused to take a precise angular position around its axis, after leaving the heating region 42 and before entering a blowing mold 48.

Such a prior art system for positioning the preforms is somewhat problematic in that its positioning member must be forced into a physical contact with each rotating preform. The positioning member will impart a considerable frictional resistance to the preform, thereby generating dust, chips and/or flashes. These dust and the like will not only render intricate the maintenance works for the production line, but also make it necessary to employ a large-sized air cleaner or the like apparatus. In particular, such preheated preforms ready to blow molding are in a softened state to make more serious the problem of dusting. In the event of mal-functio of the positioning member or the like, it would possibly injure or deform the preforms when contacting them.

In order to avoid the problem of dusting, any available noncontact type sensor such as a photoelectric tube, a glossimeter, a capacitive proximity switch and a CCD camera may be used to detect each preform's angular posture in relation to the blowing mold. However, it will be difficult to simply rely only on such a noncontact sensor to quickly position the preforms precisely relative to the blowing mold.

### SUMMARY OF THE INVENTION

An object of the present invention made in view of the drawbacks inherent in the prior art apparatuses is therefore to provide an improved method of and an apparatus for blow molding bottles such that a noncontact sensor is used to detect position of preforms each having at least one outer profiled portions, and a blowing mold used herein has at least one inner face portions matching the respective outer profiled portions so that angular position of each profile can be adjusted finely to allow it to take a precise and correct position before stretch-blow molded.

In order to achieve the object, the following technical features are employed herein.

According to the present invention, the apparatus for blow molding a bottle may comprise a heating device for heating a preform to a predetermined temperature, a blowing mold for blow molding the bottle from the preform, and a transfer unit for transferring the preform from the heating device to the blowing mold. The transfer unit may comprise a noncontact sensor and a preliminary positioning device. The sensor may sense at least one detective portion of a given shape. The detective portion may be formed on the periphery of the preform and at given angular zones thereof. The preliminary positioning device may include a rotating member for rotating the preform on the basis of signals transmitted from the noncontact sensor so as to preliminarily and angularly position the preform relative to the mold. The blowing mold may have a positioning surface that is fitted to the detective portion. And, the perform may be fixed in state of taking a target angular position in the blowing mold by fitting the positioning surface to the detective portion.

In operation of this apparatus of the invention, the noncontact sensor will detect angular position of every preform during its transfer from the heating device to the blowing mold. Transfer and rotation of every preform are effected without suffering from any frictional resistance that would give rise to the problem of producing dust. Such a preliminary preform positioning, that is carried out during transfer of the preforms so as to temporarily regulate their angular position relative to the blowing mold, need not be so precise because they are subsequently and finally positioned with high precision in said mold. Thus, any of the conventional noncontact sensors known in the art can be used well in this apparatus. Further, the final positioning by bringing the profiled detective portions of each preform into a tight engagement with the inner and profiled face portions of the blowing mold is advantageous in that the same former portions do play a key role at both the preliminary and final positioning steps. Now, the preforms can be simplified in structure, and the profiled detective portions of each preform will not impair appearance of a finished bottle even if they remain therein as residual irregularities. After the final positioning, the preforms are subjected to the blow molding process in such a state that they are inhibited from displacement in any manner relative to the mold, thus further raising the ratio of products coming up to the standards.

The transfer unit may basically be of any type known in the art, and may be composed of a first conveyor of horizontal translation type and a second conveyor of robot type. The first conveyor will move the preforms away from the heating device towards the blowing mold, with the second conveyor receiving the preforms from the first conveyor and inserting them into the mold. In this case, the second conveyor may serve as the preliminary positioning device.

The profiled detective portion may be lugs and/or recesses disposed around the mouth of each preform. Or, the profiled detective portion may be a concavity and/or a convexity formed in a mouth portion of the preform. Preferably, the detective portion may be formed in the outer periphery of the preform mouth.

The noncontact sensor may for example be an electronic camera (e.g. CCD camera) for taking an image of each preform at a given angle of view, a photoelectric tube, a glossimeter, or a capacitive proximity switch.

The blowing mold may comprise a pair of parting parts capable of clamping and opening. The parting parts will be capable of being closed to tightly enclose the preform and being opened away therefrom. Each of the parting parts may have said positioning surface of the blowing mold. Therefore, each of the positioning surfaces will come into engagement with the corresponding profiled detective portions of each preform during clamping the parting parts. Thus, the preform is regulated finely as to its angular position, at two or more points remote from each other in the direction of its circumference, thereby enabling a smoother and more accurate positioning of the preform.

The method proposed herein for blow molding bottles comprises the step of heating preforms to a given temperature, the step of blowing the thus heated preforms within a blowing mold, and characteristically two more steps of preliminarily and then finally positioning the preforms between the heating step and the blowing step. At the preliminary positioning step, a noncontact sensor is used to detect profiled detective portions of each preform, wherein these portions of a given shape and disposed at different peripheral points are positioned relative to the mold by rotating each preform. At the final positioning step, the blowing mold will be closed to tightly surround each preform so as to engage the profiled detective portions with inner and profiled face portions formed in the mold, whereby each preform is fixed in the mold in such a state that angular positions of the profiled detective portions are precisely regulated and adjusted relative to said mold.

Another method of this invention of blow molding a bottle comprises the steps of heating a preform to a predetermined temperature; blowing the bottle from the heated preform by the use of a blowing mold; preliminary positioning the preform between the heating step and the blowing step; and finally positioning the preform before the blowing step. The step of preliminary positioning the preform may comprise the steps of detecting a profiled detective portion of a given shape formed on the periphery of the preform and at given angular zoned thereof by use of a noncontact sensor; and rotating the preform so that the detective portion is preliminary and angularly positioned relative to the mold. The step of finally positioning the preform may comprise the steps of fitting a positioning surface of the blowing mold to the detective portion of the preform by means of clamping the blowing mold relative to the preform; and fitting the preform in state of taking a target angular position relative to the blowing mold thereby.

In the apparatus and method provided herein and summarized above, the profiled detective portions of each preform and the inner profiled face portions of the mold may be of any proper shape. If the former portions are lugs or protrusions, then the latter portions are formed to be recesses fitting on the protrusions. Each of the detective portions and mold face portions may preferably have tapered regions so that even if the preform is slightly offset from its target angular position, these corresponding portions can smoothly engage one another.

### BRIEF DESCRIPTION OF THE DRAWINGS

Fig. 1 is a schematic perspective view of a preform positioning device that is incorporated in a blow molding apparatus provided in an embodiment of the present invention;
Fig. 2(a) is a horizontal cross section of the preform's mouth with a first example of profiled detective portions;
Fig. 2(b) is a front elevation of the preform's mouth shown in Fig. 2(a);
Fig. 3(a) is a horizontal cross section of the preform's mouth with a second example of the profiled detective portions;
Fig. 3(b) is a front elevation of the preform's mouth shown in Fig. 3(a);
Fig. 4(a) is a horizontal cross section of the preform's mouth with a third example of the profiled detective portions;
Fig. 4(b) is a front elevation of the preform's mouth shown in Fig. 4(a);
Fig. 5(a) is a horizontal cross section of the preform's mouth with a fourth example of the profiled detective portions;
Fig. 5(b) is a front elevation of the preform's mouth shown in Fig. 5(a);
Fig. 6(a) is a horizontal cross section of the preform's mouth with a fifth example of the profiled detective portions;
Fig. 6(b) is a front elevation of the preform's mouth shown in Fig. 6(a);
Fig. 7(a) is a horizontal cross section of the preform's mouth with a sixth example of the profiled detective portions;
Fig. 7(b) is a front elevation of the preform's mouth shown in Fig. 7(a);
Fig. 8(a) is a horizontal cross section of the preform's mouth with a seventh example of the profiled detective portions;
Fig. 8(b) is a front elevation of the preform's mouth shown in Fig. 8(a);
Fig. 9(a) is a horizontal cross section of the preform's mouth with an eighth example of the profiled detective portions;
Fig. 9(b) is a front elevation of the preform's mouth shown in Fig. 9(a);
Fig. 10 is a schematic horizontal cross section of a blowing mold in its opened state, with the mold having a first example of the positioning surface of the mold;
Fig. 11 is a schematic horizontal cross section of the blowing mold in its opened state, with the mold having a second example of the positioning surface of the mold;
Fig. 12 is a schematic horizontal cross section of the blowing mold in its opened state, with the mold having a third example of the positioning surface of the mold;
Fig. 13 is a schematic horizontal cross section of the blowing mold in its opened state, with the mold having a fourth example of the positioning surface of the mold; and
Fig. 14 is a schematic plan view of the injection stretch-blow molding apparatus shown in its entirety.

### THE PREFERRED EMBODIMENTS

Now some embodiments and examples of the present invention will be described. Basically, a blow molding apparatus provided herein may comprise a preform injecting station and a blow molding station, similarly to the prior art apparatuses. The present apparatus comprises also transfer units (viz., transferring stations) for transport the preforms and the blow-molded bottles. A heating device built in a heating device will heat the preforms to a predetermined temperature, before they are transferred into a blowing mold where they are subsequently blown to form finished bottles. Typically, the present blow molding apparatus is composed of such a heating device, such a blowing mold (viz., a blow cavity mold), and such a transfer unit for transferring the preforms from the heating device to the blowing mold. Fundamental features of these devices and stations are the same as those of the prior art ones, so that they will not be detailed herein but only characteristic features of the present invention will be discussed below. The preform injecting station is not any compulsory element indispensable to the present apparatus, and the reference numerals as seen in the drawings accompanying the Japanese Patent Laying-Open Gazette No. 2000-127230 are parenthesized.

The blow molding is adapted herein to make oval bottles each having a barrel which is of a uniform wall thickness all over its periphery in cross section. Preforms (a.k.a. "parisons") to be blown to give the bottles may be such ones (viz., preforms) of an uneven wall thickness in cross section as disclosed in the Gazette No. 2000-127230, or such ones as heated to be of different temperatures along their circumferences in cross section.

The transfer unit (18) comprise several sprockets (30), a chain (32) spanned over these sprockets, a drive mechanism for causing the chain to circulate, and a plurality of preform holders (36) fixed on and along the chain at regular intervals. Similarly to the prior art blow molding apparatuses, each preform holder can temporarily hold therein one of preforms or finished bottles.

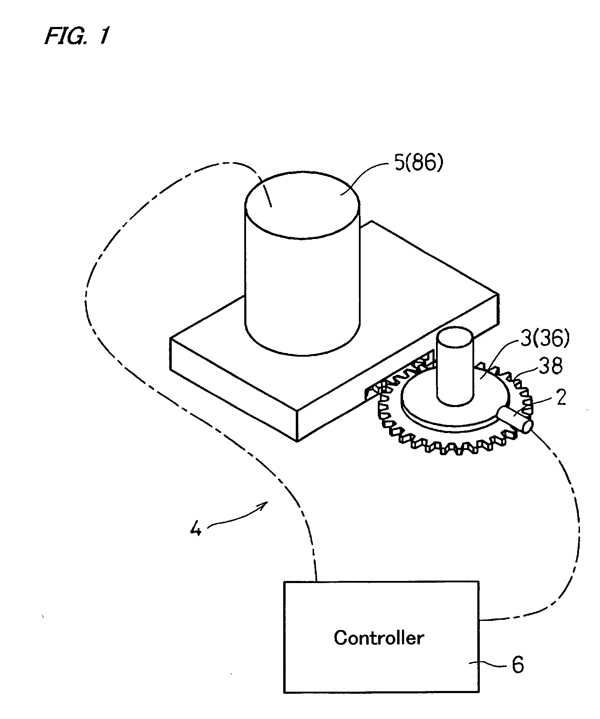

In this embodiment shown in Fig. 1, the transfer unit (18) comprises a noncontact sensor 2 and a preliminary positioning device 4. The sensor 2 will detect the profiled detective portions of a given shape and disposed at points along the periphery of each preform's mouth. The preform holder 3 will be driven to rotate in response to signals generated by the sensor 2 to bring the preform's profiled detective portion to a preliminary regulated angular position in the blowing mold. Such a noncontact sensor 2 substitutes the preform positioning means (60) in the prior art apparatus. The preliminary positioning device 4 uses signals from the noncontact sensor 2 to determine or suppose the current angular position of the preforms. This device 4 will subsequently actuate and control a motor 5 (86) to rotate the preform in the individual preform holder 3 until its profiled detective portion comes to a target angular position. Other structural elements of this preliminary positioning device 4 are the same as those in the prior art device (52).

A controller 6 included in this preliminary positioning device 4 will therefore receive the signals from the noncontact sensor 2 and generate command signals to drive the motor 5 rotating the preform holders 3.

An example of such a noncontact sensor 2 is a CCD camera capable of taking an image of the mouth periphery of each preform held in place in the holder 3, as viewed at a proper angle. The image data thus obtained will then be input to the controller 6 where a proper image processing is conducted to determine the current angular position of the profiled detective portions, which are formed on the periphery of each preform's mouth. The image processing may be done by any of the methods known in the art, and may include the steps of extracting from each image data certain patterns of edges, contours and lines. Detection of edges may for example be done using the secondary differentiation treatment, the Pfaff's conversion or the like technique. Edge-indicating series of pixels obtained from images of a graduated tone are usually broken each at several points along a detected line. Therefore, certain electronic and mathematical data processing or pretreatments such as the expansion or dilation, the contraction or shrinkage of an image area and the extrapolation treatment may preferably be conducted at first to effect interpolation and bridge the broken pixel lines.

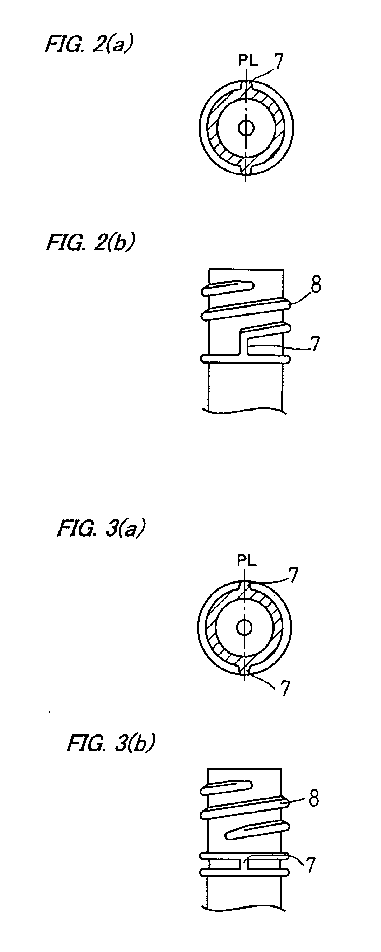

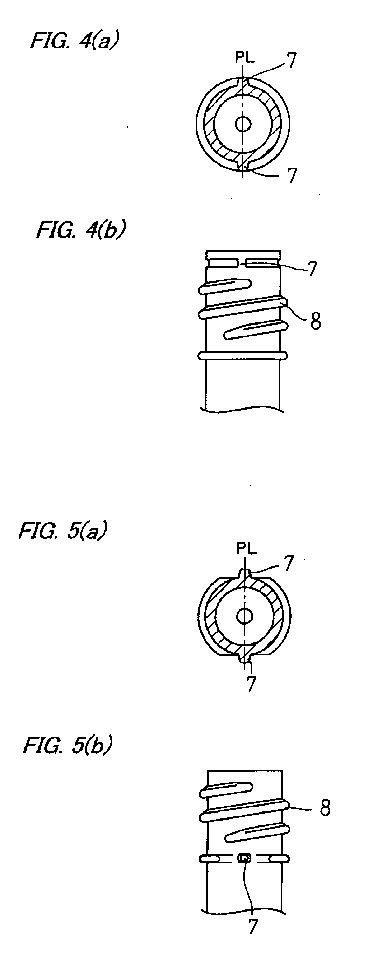

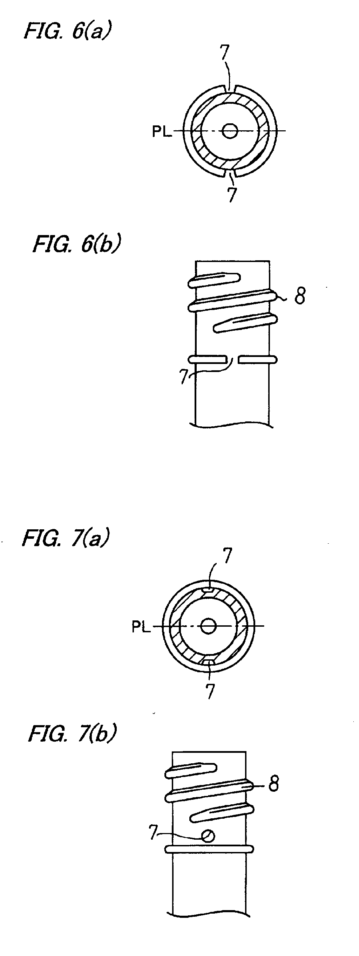

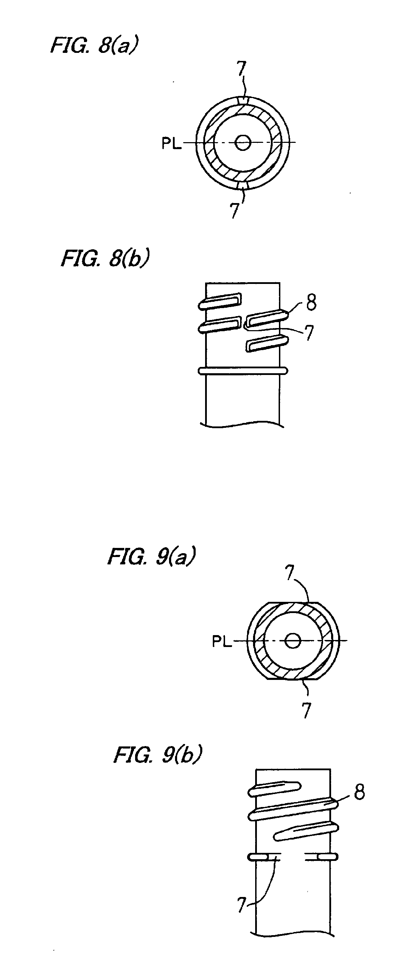

The profiled detective portions 7 on each preform's mouth may be of any appropriate structure or shape. They may be vertical ribs as shown in Figs. 2(a) to 5(b), or recesses, dimples or concavities as shown in Fig. 6(a) to 9(b). The phantom lines denoted with the symbol 'PL' in these figures do correspond to parting lines for the blowing mold. The ends of a screw thread 8 formed around the preform mouth can also be utilized as the profiled detective portions 7. However, the inner profiled face portions matching such screw thread ends 8 are too expensive to form in the blowing mold, due to an extremely high precision needed therefor. In view of such a difficulty, it is preferable to form protruded or recessed portions below the screw thread 8 as in any of Figs. 2(a) to 9(b) to serve as the profiled detective portions 7.

The noncontact sensor 2 and the preliminary positioning device 4 operate between the heating step in the heating device (43) and the blow-molding step in the blowing mold (48). Angular position of each preform relative to the blowing mold (48) will thus be regulated preliminarily but roughly to such a degree that the blowing mold can be fastened on the preform to tightly grip it.

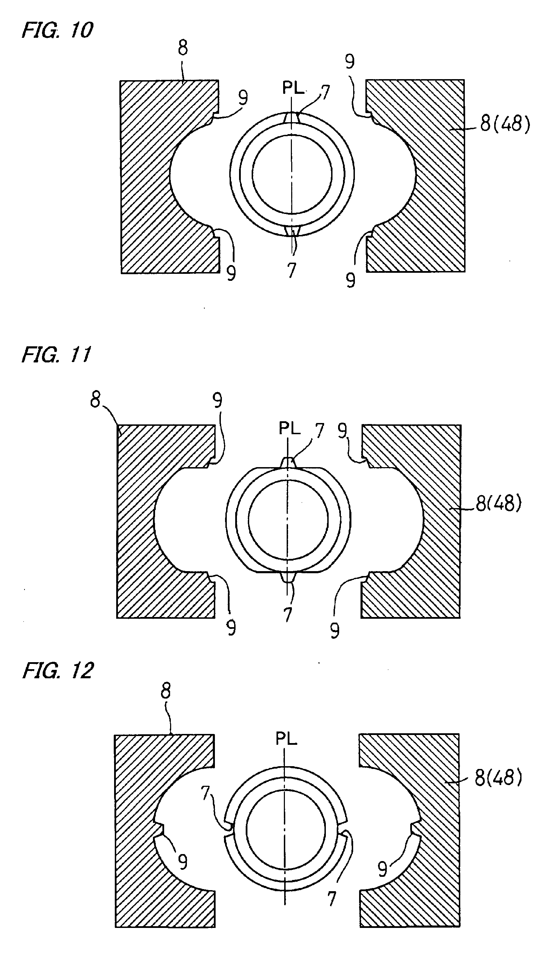

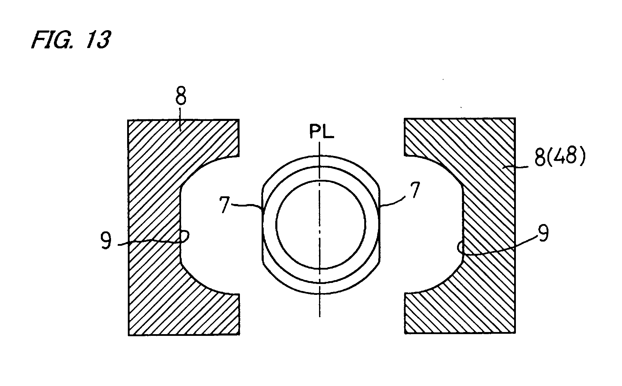

As seen in Figs. 10 to 13, the blowing mold (48) is composed of a pair of parting parts 8 that can be fastened towards and released off the preform. Each part 8 has the inner profiled positioning surface 9, which will engage with the preform's profiled detective portion 7 so as to finally and strictly set it in a precise angular position. Those positioning surfaces 9 may be of any configuration, and in one case shown in Fig. 10 or 11 they are composed of complementary halves extending across the parting line 'P.L.'. In another case shown in Fig. 12 or 13, each positioning surface is disposed at the middle region of the half 8 of blowing mold. Figs. 10 to 13 are horizontal cross sections each taken at the height of such surface 9, but the remainder regions of the blowing mold are designed to form the barrel in each finished bottle as in the prior art, and not detailed here.

As fully described above, the noncontact sensor 2 operates between the heating step in the heating device (43) and the blow molding step in the blowing mold (48) so as to detect current angular position of each preform. Based on the data thus obtained, each preform will preliminarily be set in place close to its target angular position such that the positioning surface can automatically correct the preliminary position to accurately coincide with the target position during clamping the blowing mold. Thus, the problem of dusting is diminished when quickly and precisely positioning each preform to take the target angular position relative to said mold. Yield of high quality products will now be improved in manufacture of oval bottles molded from parisons of uneven wall thickness.

## Claims

1. An apparatus for blow molding a bottle comprising a heating device for heating a preform to a predetermined temperature, a blowing mold for blow molding the bottle from the preform, and a transfer unit for transferring the preform from the heating device to the blowing mold, the transfer unit comprising a noncontact sensor and a preliminary positioning device, the sensor sensing at least one detective portion of a given shape, the detective portion formed on the periphery of the preform and at given angular zones thereof, the preliminary positioning device including a rotating member for rotating the preform on the basis of signals transmitted from the noncontact sensor so as to preliminarily and angularly position the preform relative to the mold, the blowing mold having a positioning surface that is fitted to the detective portion, and the perform fixed in state of taking a target angular position in the blowing mold by fitting the positioning surface to the detective portion.

2. An apparatus as defined in claim 1, wherein the transfer unit is composed of a first conveyor and a second conveyor, with the first conveyor moving the preforms from the heating device towards the blowing mold, and the second conveyor receiving the preforms from the first conveyor and inserting them into the blowing mold.

3. An apparatus as defined in claim 2, wherein the second conveyor serves as the preliminary positioning device.

4. An apparatus as defined in claim 1, wherein the profiled detective portion is a concavity and/or a convexity formed in a mouth portion of the preform.

5. An apparatus as defined in claim 4, wherein the profiled detective portions are formed on an outer periphery of the mouth portion.

6. An apparatus as defined in claim 1, wherein the noncontact sensor is an electronic camera for taking an image of the preform at a given angle of view.

7. An apparatus as defined in claim 1, wherein the blowing mold comprises a pair of parting parts capable of clamping and opening.

8. An apparatus as defined in claim 7, wherein each of the parting parts has the positioning surface.

9. An apparatus as defined in claim 1, wherein the preform is of an uneven wall thickness in cross section.

10. A method of blow molding a bottle comprising the steps of:
heating a preform to a predetermined temperature;
blowing the bottle from the heated preform by the use of a blowing mold;
preliminary positioning the preform between the heating step and the blowing step; and
finally positioning the preform before the blowing step,
the step of preliminary positioning the preform comprising the steps of detecting a profiled detective portion of a given shape formed on the periphery of the preform and at given angular zoned thereof by use of a noncontact sensor; and rotating the preform so that the detective portion is preliminary and angularly positioned relative to the mold, and
the step of finally positioning the preform comprising the steps of fitting a positioning surface of the blowing mold to the detective portion of the preform by means of clamping the blowing mold relative to the preform; and fitting the preform in state of taking a target angular position relative to the blowing mold thereby.

11. The method as defined in claim 10, wherein the profiled detective portion is a concavity and/or a convexity formed in a mouth portion of the preform.

12. The method as defined in claim 11, wherein the profiled detective portion is formed on an outer periphery of the mouth portion.

13. The method as defined in claim 10, wherein the noncontact sensor is an electronic camera for taking an image of the preform at a given angle of view.

14. The method as defined in claim 10, wherein the blowing mold comprises a pair of parting parts capable of clamping and opening.

15. The method as defined in claim 14, wherein each of the parting parts has the positioning surface.

16. The method as defined in claim 10, wherein the preform is of an uneven wall thickness in cross section.
